# EUROPÄISCHE PATENTSCHRIFT

(11) **EP 0 782 494 B1**
(45) Veröffentlichungstag und Bekanntmachung des Hinweises auf die Patenterteilung: **15.04.1998**
(21) Anmeldenummer: 95934064.7
(22) Anmeldetag: 15.09.1995
(51) Int. Cl.: B25G 3/18

(54) **HANDGRIFF FÜR HAUS- UND GARTENGERÄTE**
HANDLE FOR DO-IT-YOURSELF AND GARDENING TOOLS
POIGNEE POUR OUTILS DE JARDINAGE ET DE BRICOLAGE

(30) Priorität: 23.09.1994 DE 4434099
(43) Veröffentlichungstag der Anmeldung: 09.07.1997
(73) Patentinhaber: WOLF-Geräte GmbH Vertriebsgesellschaft KG, D-57518 Betzdorf/Sieg (DE)
(72) Erfinder: SCHNEIDER, Manfred, D-66606 St. Wendel (DE); SUCK, Bruno, D-55768 Hoppstädten-Weierbach (DE)
(74) Vertreter: Koch, Günther, Dipl.-Ing.
(86) Internationale Anmeldenummer: EP9503646
(87) Internationale Veröffentlichungsnummer: WO9609143

(56) Entgegenhaltungen:
- EP-A- 0 057 916
- EP-A- 0 547 628
- DE-U- 9 312 468

## Beschreibung

Die Erfindung bezieht sich auf einen Handgriff für Haus- und Gartengeräte, die mittels einer Befestigungskupplung am Handgriff lösbar festlegbar sind, wobei der griffseitige Kupplungsteil eine Kupplungsblattfeder aufweist, die in Grifflängsrichtung verlaufend mit einem Ende im Griff festgelegt ist und mit ihrem freien Ende quer zur Griffachse vorgespannt in einer axialen Griffausnehmung quer beweglich ist und eine Abkröpfung als Riegelfalle trägt, während der geräteseitige Kupplungsteil einen in die Griffausnehmung einpassenden Geräteeinsteckzapfen mit einem Verriegelungsloch besitzt, in das die Riegelfalle einrastet, wobei ein manuell betätigbarer Auslöseknopf auf die Blattfeder im Sinne einer Entriegelung einwirken kann. Derartige Handgriffe und dazupassende Gartengeräte werden in großem Umfange benutzt, wobei die Befestigungskupplung die Möglichkeit schafft, mit einem Handgriff verschiedene Gartengeräte zu benutzen. Die Kupplungsanordnung ist bei den bisher benutzten Geräten gemäß der DE-C-31 30 703 bzw. der DE-C-32 46 887 derart ausgebildet, daß der Auslöseknopf axial verschiebbar bzw. querverschieblich im Griffstück gelagert ist und somit unmittelbar auf das Ende der Kupplungsfeder einwirken kann, um die als Riegelfalle dienende Abkröpfung aus dem Verriegelungsloch des Geräteeinsteckzapfens auszuheben. Diese Befestigungskupplungen wurden als Stielbefestigungskupplungen konzipiert, wobei die Gartengeräte an einem relativ langen Stiel festgelegt wurden und die Hände entfernt vom Auslöseknopf am Stiel angreifen.

Es hat sich jedoch gezeigt, daß bei Anwendung dieser bekannten Stielbefestigungskupplungen für relativ kurze Handgriffe Fehlfunktionen insofern auftreten konnten, als die das Griffstück erfassende Hand versehentlich den Auslöseknopf, beispielsweise mit dem Daumen, verschieben oder niederdrücken konnte, was zu einem Lösen des Gartengerätes führte. Ein derart ausgelöstes Werkzeug konnte bei weiterer Bearbeitung vom Griffstück fortgeschleudert werden, was sogar zu Verletzungen führen konnte. Ein unbeabsichtigtes Entriegeln der Kupplung konnte unter Umständen auch dann eintreten, wenn das Werkzeug abgeworfen wurde und dabei ungünstig mit dem Auslöseknopf auf einen harten Gegenstand aufprallte.

Der Erfindung liegt daher die Aufgabe zugrunde, den gattungsgemäßen Handgriff derart auszubilden, daß ein unbeabsichtigtes Lösen der Kupplung mit Sicherheit vermieden, ein beabsichtigtes Auslösen jedoch bequem möglich wird.

Gelöst wird die gestellte Aufgabe durch die im Kennzeichnungsteil des Patentanspruchs 1 angegebenen Merkmale.

Dadurch, daß der Auslöseknopf im Griffende axial verschiebbar angeordnet ist und von der Stirnseite des Griffes her betätigt werden muß, ist bei bestimmungsgemäßem Gebrauch des Gartengerätes eine Berührung des Auslösers ausgeschlossen. Auch beim Ablegen des Gerätes kann der Auslöseknopf nicht versehentlich eingedrückt werden.

Da das Eindrücken in Richtung der Griffachse erfolgt und die Kupplungsblattfeder in radialer Richtung ausgelenkt werden muß, um die Abkröpfung aus dem Verriegelungsloch auszuheben, muß ein Umlenkorgan vorgesehen werden. Dieses könnte in der einfachsten Form als Schiebekeil ausgebildet sein. Dabei bestünde jedoch keine Sicherheit dafür, daß die radial wirkende Federkraft der Blattfeder den Auslöseknopf wieder in die Ausgangslage überführt, so daß hierbei eine zusätzliche Rückholfeder erforderlich wäre. Um diese zusätzliche Feder entbehrlich zu machen und den Auslöseknopf durch die Kraft der Blattfeder in die Ausgangslage zurückzuführen, ist das Umlenkorgan als Kipphebel in Gestalt eines Winkelhebels ausgebildet, auf dessen einen Hebelarm der Auslöseknopf einwirkt und dessen anderer Hebelarm mit der Kupplungsfeder in Wirkverbindung steht.

Weitere Ausgestaltungen der Erfindung ergeben sich aus den abhängigen Ansprüchen 2-5.

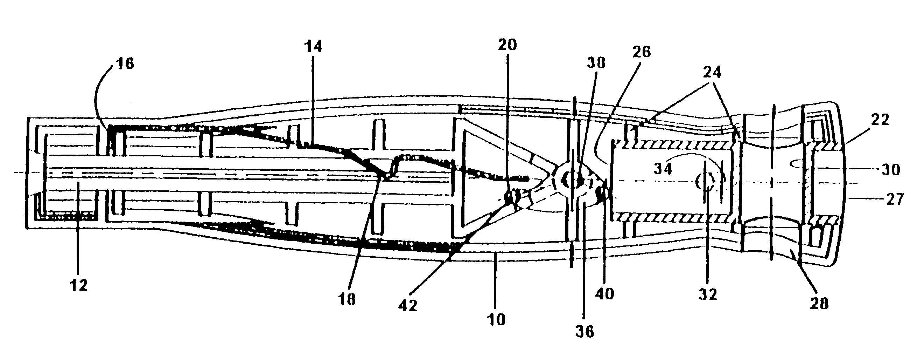

Nachstehend wird ein Ausführungsbeispiel der Erfindung anhand der Zeichnung beschrieben. Die einzige Figur der Zeichnung zeigt einen Axialschnitt eines erfindungsgemäß ausgebildeten Handgriffs.

Der aus zwei mit Verrippungen versehenen Halbschalen bestehende Handgriff 10 weist eine axiale Griffausnehmung 12 auf, deren Rechteckquerschnitt dem Querschnitt des Geräteeinsteckzapfens angepaßt ist, mit dem das Werkzeug mit dem Handgriff verbunden wird. In den Rechteckquerschnitt der axialen Griffausnehmung steht eine Kupplungsblattfeder 14 radial federnd ein. Diese Blattfeder 14 ist mit ihrem Ende 16 im Griff fest verankert, und sie erstreckt sich in Längsrichtung des Griffes, wobei eine als Riegelfalle wirkende Abkröpfung 18 im Querschnitt der axialen Griffausnehmung zu liegen kommt. Beim Einstecken des Geräteeinsteckzapfens in die axiale Griffausnehmung 12 wird die Blattfeder gemäß der zeichnerischen Darstellung nach oben ausgelenkt, wenn das Vorderende des Einsteckzapfens die Auflaufschräge der Abkröpfung berührt. Sobald die Abkröpfung über dem Verriegelungsloch des Geräteeinsteckzapfens zu liegen kommt, federt die Blattfeder 14 in die aus der Zeichnung ersichtliche Lage zurück, wodurch die steile Flanke der Abkröpfung am Lochrand zu liegen kommt, so daß eine formschlüssige Verbindung zwischen Handgriff und Gerät hergestellt wird. Das freie Ende 20 der Blattfeder verläuft in Ruhestellung etwa in der Längsachse des Griffes.

Ein Auslöseknopf 22 ist von Führungsrippen 24 im Inneren der Griffschalen axial verschiebbar gelagert. Der Auslöseknopf hat im wesentlichen die Gestalt eines Kreiszylinders, der am inneren Ende eine mit radialen Rippen versehene Druckfläche 26 bildet, während er am äußeren Ende 27 mit der Stirnseite des Griffes fluchtet. Die Griffschalen weisen aufeinander ausgerichtete Aufhängelöcher 28 auf, die sich in einem Durchgangsloch 30 des Auslöseknopfes 22 fortsetzen, wenn der Knopf in Ruhestellung befindlich ist. Die axiale Verschiebung des Knopfes 22 wird durch einen die Griffschalen radial durchsetzenden Stift 32 begrenzt, der durch ein Langloch 34 des Knopfes 22 hindurchsteht, so daß durch Anschlag des Stiftes an den beiden Langlochenden die Verschiebung begrenzt wird.

Zur Übertragung der Verschiebebewegung des Auslöseknopfes 22 auf das Ende 20 der Blattfeder ist ein als Winkelhebel ausgebildeter Kipphebel 36 vorgesehen, der um eine Lagerachse 38 schwenkbar ist, die in den Griffschalen gelagert ist und die Griffachse senkrecht schneidet. Der Kipphebel weist einen Schaltstift 40 auf, der auf der inneren Druckfläche 26 des zylindrischen Auslöseknopfes 22 reitet. Der andere Hebelarm trägt einen Auslösestift 42, der in Ruhestellung neben dem freien Ende 20 der Blattfeder 14 zu liegen kommt.

Beim Eindrücken des Auslöseknopfes 22 reitet der Schaltstift 40 auf der inneren Druckfläche 26 des Auslöseknopfes 22, so daß der Kipphebel 36 um seine Lagerachse 38 im Uhrzeigersinn verschwenkt wird. Dabei berührt der Auslösestift 42 das freie Ende 20 der Blattfeder 14 und hebt diese aus, so daß die Abkröpfung 18 aus dem Verriegelungsloch des nicht dargestellten Geräteeinsteckzapfens ausgehoben wird. Der Geräteeinsteckzapfen kann nunmehr frei aus der axialen Griffausnehmung herausgezogen werden. Nach Loslassen des Auslöseknopfes 22 wirkt die Rückstellkraft der Blattfeder 14 auf den Auslösestift 42 und verschwenkt den Kipphebel 36 im Gegenuhrzeigersinn, so daß der Schaltstift 40 den Auslöseknopf 22 in die Ausgangslage gemäß der zeichnerischen Darstellung zurückführt.

### Bezugszeichenliste

- 10: Handgriff
- 12: Griffausnehmung
- 14: Kupplungsblattfeder
- 16: festgelegtes Ende
- 18: Abkröpfung
- 20: freies Ende
- 22: Auslöseknopf
- 24: Führungsrippen
- 26: Druckfläche
- 27: äußeres Ende
- 28: Aufhängelöcher
- 30: Durchgangsloch
- 32: Stift
- 34: Langloch
- 36: Kipphebel
- 38: Lagerachse
- 40: Schaltstift
- 42: Auslösestift

## Patentansprüche

1. Handgriff für Haus- und Gartengeräte, die mittels einer Befestigungskupplung am Handgriff (10) lösbar festlegbar sind, wobei der griffseitige Kupplungsteil eine Kupplungsblattfeder (14) aufweist, die in Grifflängsrichtung verlaufend mit einem Ende (16) im Griff (10) festgelegt ist und mit ihrem freien Ende (20) quer zur Griffachse vorgespannt in einer axialen Griffausnehmung (12) quer beweglich ist und eine Abkröpfung (18) als Riegelfalle trägt, während der geräteseitige Kupplungsteil einen in die Griffausnehmung (12) einpassenden Geräteeinsteckzapfen mit einem Verriegelungsloch besitzt, in das die Riegelfalle (18) einrastet, wobei ein manuell betätigbarer Auslöseknopf (22) auf die Blattfeder (14) im Sinne einer Entriegelung einwirken kann,
dadurch gekennzeichnet, daß der Auslöseknopf (22) im Griffende axial verschiebbar (24) gelagert und von der Stirnseite des Griffendes her betätigbar ist und mit einem Umlenkorgan (36) in Wirkverbindung steht, welches beim axialen Eindrücken des Knopfes die Riegelfalle (18) in radialer Richtung aus dem Verriegelungsloch aushebt, daß das Umlenkorgan als Kipphebel (36) ausgebildet ist, der um eine die Griffachse kreuzende oder schneidende Achse verschwenkbar ist und mit dem inneren Ende des Auslöseknopfes (22) bzw. dem freien Ende (20) der Blattfeder zusammenwirkt und daß der Kipphebel als Winkelhebel ausgebildet ist und mit einem Schaltstift (40) auf der inneren Druckfläche (26) des Auslöseknopfes (22) reitet, während das andere Ende des Kipphebels einen Auslösestift (42) trägt, der mit dem freien Ende (20) der Blattfeder zusammenwirkt.

2. Handgriff nach Anspruch 1,
dadurch gekennzeichnet, daß die axiale Verschiebebewegung des Auslöseknopfes im Handgriff durch einen Stift (32) begrenzt ist, der in radialer Richtung Langlöcher (32) des Auslöseknopfes (22) durchsetzt.

3. Handgriff nach Anspruch 1 und 2,
dadurch gekennzeichnet, daß der Auslöseknopf (22) ein Querloch (30) aufweist, welches mit radialen Aufhängelöchern (28) der Griffschalen des Handgriffs fluchtet.

4. Handgriff nach einem der Ansprüche 1 bis 3,
dadurch gekennzeichnet, daß die hintere Stirnfläche des Handgriffs ballig ausgeführt ist und das äußere Ende (27) des Auslöseknopfes im ungedrückten Zustand Teil dieser Fläche ist.

5. Handgriff nach den Ansprüchen 1 bis 4,
dadurch gekennzeichnet, daß die Druckfläche des Auslöseknopfes (22) durch Querschlitze unterbrochene Rippen aufweist.

## Claims

1. Handle for household and gardening implements that are adapted to be releasably located on the handle (10) by means of an attachment coupling, with the part of the coupling that is nearest the handle featuring a coupling leaf spring (14) which extends lengthways along the handle and has one end (16) located in the handle (16), is pretensioned by its free end (20) at a right angle to the handle axis and is movable transversely in an axial recess (12) in the handle and incorporates an offset section (18) to act as a latch catch, whereas the part of the coupling that is nearest the implement has an implement insertion pin which fits into the recess (12) in the handle and incorporates a locking hole into which the latch catch (18) engages, and a release button (22) adapted for manual actuation is designed to operate on the leaf spring (14) so as to disengage the implement from the handle, characterised in that the release button (22) is mounted so as to be axially displaceable (24) in the end of the handle and is adapted to be operated from the end face of the handle extremity and is operatively connected to a deflecting element (36) which lifts the latch catch (18) out of the locking hole in a radial direction when the button is depressed axially, in that the deflecting element is in the form of a rocking lever (36) which is adapted to swivel on an axis crossing or intersecting the handle axis and cooperates respectively with the inner extremity of the release button (22) and with the free end (20) of the leaf spring, and in that the rocking lever is configured as an elbow lever and rides with an actuating bolt (40) on the inner pressure surface (26) of the release button (22), whereas the other end of the rocking lever carries a releasing bolt (42) which cooperates with the free end (20) of the leaf spring.

2. Handle according to claim 1, characterised in that the axial displacement movement of the release button in the handle is limited by a peg (32) which passes in a radial direction through slots (34) in the release button (22).

3. Handle according to claim 1 and 2, characterised in that the release button (22) features a transverse hole (30) which lies flush with radial hanging holes (28) in the grip shells of the handle.

4. Handle according to any of claims 1 to 3, characterised in that the rear end face of the handle is a barrel-faced construction and the outer end (27) of the release button forms a part of that surface when the button is not being depressed.

5. Handle according to claims 1 to 4, characterised in that the pressure surface of the release button (22) incorporates ribbing interrupted by transverse grooves.

## Revendications

1. Poignée pour outils de jardinage et de bricolage qui peuvent être fixés de manière séparable à la poignée (10) à l'aide d'un moyen d'accouplement, la partie d'accouplement côté poignée comportant une lame ressort d'accouplement (14) qui s'étend dans la direction longitudinale de la poignée (10), est fixée dans celle-ci par une extrémité (16), est précontrainte transversalement à l'axe de la poignée par son extrémité libre (20), est mobile transversalement à l'intérieur d'un évidement (12) axial de la poignée et porte une partie coudée (18) formant pêne de verrouillage, tandis que la partie d'accouplement côté appareil comporte une queue d'outil qui s'ajuste dans l'évidement de la poignée et est pourvue d'un trou de verrouillage dans lequel s'enclenche le pêne de verrouillage (18), un bouton de déclenchement (22) actionné manuellement pouvant agir sur la lame ressort (14) dans le sens d'un déverrouillage, caractérisée par le fait que le bouton de déverrouillage (22) est monté coulissant dans la direction axiale dans l'extrémité de la poignée, peut être actionné depuis la face frontale de ladite poignée et coopère avec un organe de renvoi (36) qui, lorsqu'on enfonce axialement le bouton soulève radialement le pêne de verrouillage (18) hors du trou de verrouillage, par le fait que l'organe de renvoi est conformé en culbuteur (36) qui pivote autour d'un axe pivot croisant ou sécant avec l'axe de la poignée et coopère avec l'extrémité intérieure du bouton de déclenchement (22) ou l'extrémité libre (20) de la lame ressort et par le fait que le culbuteur est conformé en levier coudé et se déplace avec un doigt d'actionnement (40) sur la surface de pression intérieure (26) du bouton de déclenchement (22) tandis que l'autre extrémité du culbuteur porte un doigt de déclenchement (42) qui coopère avec l'extrémité libre (20) de la lame ressort.

2. Poignée selon la revendication 1, caractérisée par le fait que le coulissement axial du bouton de déclenchement dans la poignée est limité par une goupille (32) qui s'étend radialement à travers des trous oblongs (32) du bouton de déclenchement (22).

3. Poignée selon la revendication 1 ou 2, caractérisée par le fait que le bouton de déclenchement (22) comporte un trou transversal (30) qui est aligné avec des trous d'accrochage (28) radiaux des demi-coquilles de la poignée.

4. Poignée selon une des revendications 1 à 3, caractérisée par le fait que la face frontale arrière de la poignée est bombée et que l'extrémité extérieure (27) du bouton de déclenchement fait partie de cette surface en position non enfoncée.

5. Poignée selon une des revendications 1 à 4, caractérisée par le fait que la surface de pression du bouton de déclenchement (22) présente des nervures interrompues par des fentes transversales.
